# EUROPEAN PATENT APPLICATION

(11) **EP 4 015 260 A1**
(43) Date of publication of application: **22.06.2022**
(21) Application number: 21210144.8
(22) Date of filing: 24.11.2021
(51) Int. Cl.: B60C 29/00, F16K 15/20, C22C 21/02, C22C 21/06, C22C 21/12

(54) **LEAD-FREE VALVE FOR INFLATING TIRES FOR A TRUCK OR COMMERCIAL VEHICLE**

(30) Priority: 18.12.2020 IT 202000031436
(71) Applicant: Wonder SPA, 26100 Cremona (CR) (IT)
(72) Inventor: CAPELLI, Andrea, I-26100 CREMONA (IT); CAZZANTI, Stefano, I-26100 CREMONA (IT); GOSI, Matteo, I-26100 CREMONA (IT)
(74) Representative: Gualeni, Nadia

(57) **Abstract**

A valve (1) for inflating tires for trucks or commercial vehicles comprises a valve body (10) having a head (11) below which a stem (18) extends, in which stem a mechanism (180) for inflating/deflating the tire is inserted, and a locking nut (5) which may be screwed onto the external thread (214) of the stem (18). In particular, the valve body (10) is made of aluminum alloy having a lead content of less than 0.1%.

## Description

This invention relates to a valve for inflating tires of trucks or commercial vehicles, which valve may also be of the kind that may be associated with a TPMS transducer.

The reference field is therefore that of valves for inflating tires of rubber wheels of trucks, which valves may also be of the kind that may be associated with TPMS (tire pressure monitoring system) technology, wherein electronic sensors for detecting and transmitting operating parameters of the tires, in particular the pressure (and temperature), are mounted directly on the valve, which valve is fixed to the wheel of the truck by means of a hole made in the rim, which hole has a diameter between 9.7 mm ÷ 10 mm or between 15.7 mm ÷ 16.1 mm.

Such valves for trucks generally consist of a shaped head, which is usually cylindrical, hemispherical or polygonal and which may also be associated with a transducer containing the electronic sensors, and an elongated shank (or stem) which makes it possible for the tire to be inflated/deflated and for the valve to be fixed to the rim of the wheel by means of suitable screw locking means. It should be noted that this stem may be straight or bent, or even in some cases bent in numerous places. These screw locking means generally consist of a nut which screws onto a nut screw formed on the shank portion of the valve projecting outwardly from the rim.

If there is a transducer present, the valve and the transducer are usually first assembled together in a valve-transducer group by means of a fixing screw, and then the valve-transducer group is positioned on the rim of the wheel such that the valve projects outside the rim and the transducer is housed inside the tire. The valve-transducer group is clamped to the rim by means of the nut which, by screwing onto the shank of the valve, comes to abut against the head of the valve, with a seal or an O-ring arranged therebetween, on the inner edge of the rim. In addition to the nut, a washer may also be present.

Known valves for trucks are made from brass. These valves have some disadvantages linked to the use of brass.

Brass is in fact an alloy containing lead, which is considered to be an element which is toxic to human health, dangerous in terms of disposal, and subject to specific authorization whenever its presence exceeds 0.1%.

Nevertheless, the use of lead-free brass for valves for trucks is not easily practicable, given the need to machine both the inside and outside of the valve body; in fact, the presence of lead in the alloy ensures the workability of the material.

Moreover, brass is an expensive and heavy material that is not widely recyclable. Lead-free brass which necessarily has the alloy elements adapted to improve the workability thereof is more expensive still.

Therefore, in the field of valves for inflating tires of trucks, there is a need to provide valves which have an equivalent strength but are made of a material other than brass.

This requirement is satisfied by an aluminum valve for inflating tires of trucks according to claim 1. Other embodiments of the valve according to the invention are described in the dependent claims.

Further features and advantages of this invention will become more apparent from the following detailed description of a preferred, non-limiting embodiment thereof, in which:
- Fig. 1 is a cross-sectional view of a valve according to this invention, in one embodiment;
- Fig. 2 shows the valve of Fig. 1 and the relative locking means;
- Fig. 3 is a cross-sectional view of a valve according to this invention, in a further embodiment;
- Fig. 4 shows the valve of Fig. 3 and the relative locking means;
- Fig. 5 is a cross-sectional view of a valve according to this invention, in one embodiment which may be associated with a transducer containing sensors;
- Fig. 6 shows the valve of Fig. 5 and the relative locking means;
- Fig. 7 shows the valve of Fig. 1 in a use phase mounted on a rim of a truck;
- Fig. 8 shows the valve of Fig. 3 in a use phase mounted on a rim of a truck;
- Fig. 9 shows the valve of Fig. 5 in a use phase, together with a TPMS sensor, mounted on a rim of a truck.

In the above figures, identical or similar elements are denoted by the same reference signs.

With reference to the aforementioned figures, the reference sign 1 is used to generally denote a valve 1 for inflating tires, which valve may also be associated with a TPMS transducer 3.

The valve 1 comprises a valve body 10 provided with a head 11 below which a stem 18 extends.

In one embodiment, the valve body 10 is made as a single piece, which means that the head 11 and the stem 18 are integrally formed.

In a further embodiment, the head 11 and the stem 18 are mechanically connected so as to form the valve body 10.

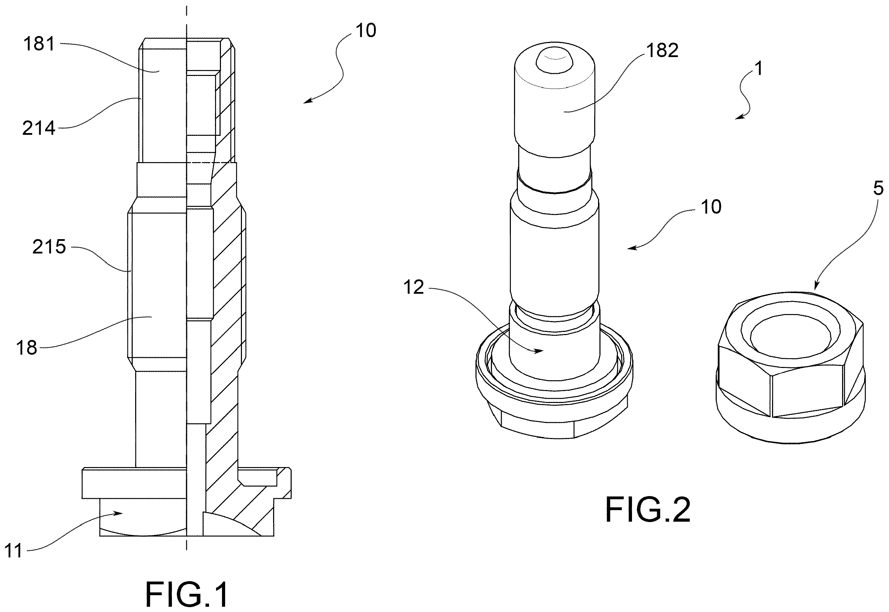

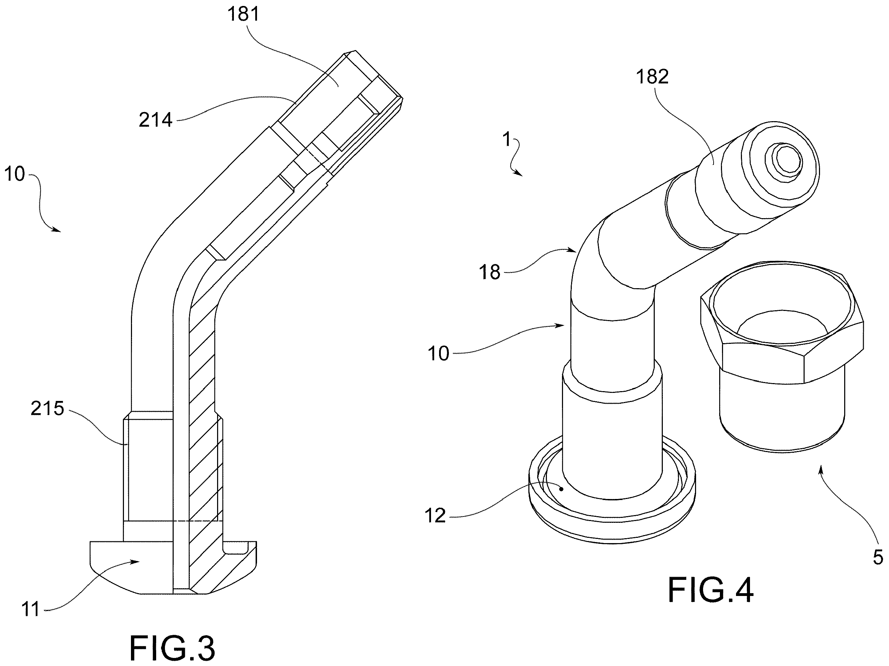

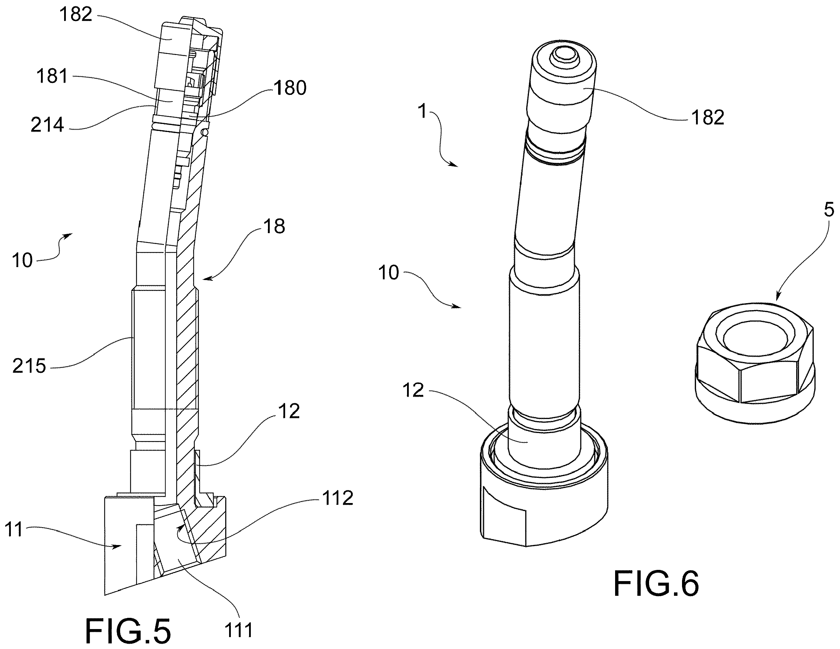

In the variants shown in Fig. 3 and 5, the stem 18 is curved, i.e. provided with a particular curvature; in the variants shown in Fig. 1, the stem 18 is straight, i.e. rectilinear.

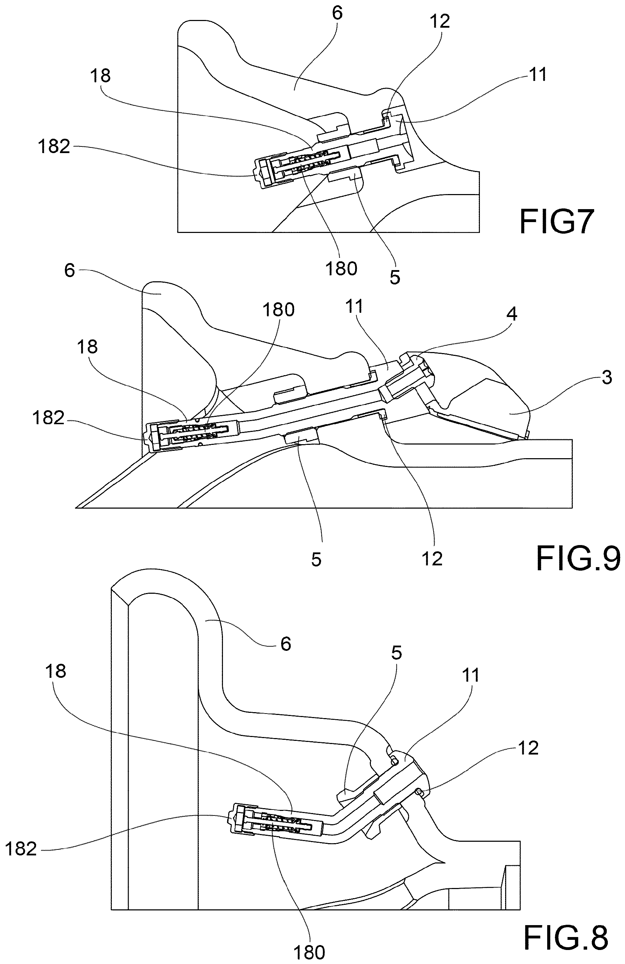

The stem 18 comprises an end portion 181 in which a mechanism 180 for inflating/deflating the tire is inserted, which can be seen for example in Fig. 7 to 9.

The valve 1 therefore comprises a mechanism 180 for inflating/deflating the tire, which mechanism is inserted in the valve body 10.

The end portion 181 of the stem 18 is preferably closed by a cap 182 which may be screwed onto the stem via an external thread 214.

The valve 1 therefore comprises a cap 182 screwed onto the valve body 10.

The stem 18, below the head 11, is provided with an external thread 215 to allow a locking nut 5 to be screwed thereon.

The valve 1 therefore comprises a locking nut 5 which is fitted and screwed onto the valve body 10.

The head 11 of the valve 1 may have different configurations. With reference to Fig. 3, the valve 1 is provided with a hemispherical head 11. Alternative shapes for the valve 1 may include cylindrical or polygonal heads 11 (for example Fig. 1 and 5).

When coupled to a transducer 3, as is the case with the valve in Fig. 5, the head 11 is provided with an axial hole 111 having an internal thread 112 for allowing a drilled screw 4 to be inserted therein.

Therefore, in the embodiment of Fig. 5, the valve 1 also comprises a transducer 3 and a drilled screw 4.

Fig. 7 to 9 show the valve 1 mounted on the rim 6 of a wheel of a truck; in Fig. 9 a transducer 3 is also mounted thereon.

As noted, the head 11 of the valve, and the particular transducer 3 if present, is positioned inside the air volume delimited by the particular tire, while the stem 18 projects from the outside of the rim 6.

The valve 1 is stably fixed to the rim 6 by means of a locking nut 5 which is screwed onto the stem 18 below the head 11.

In the case of the transducer, a drilled screw 4 passes through the head 11 and the transducer 3, which drilled screw allows these to be fixed to one another.

A seal 12 is arranged between the inner edge of the rim 6 and the head 11 of the valve 1 that abuts against the rim.

The valve 1 therefore comprises a seal 12 fitted onto the valve body 10.

The seal 12 is preferably made of elastomeric material, for example is an O-ring (Fig. 8) or a shaped seal known as a grommet (Fig. 7 and 9).

As the valve 1 according to this invention is a valve for a truck or commercial vehicle, it is designed to be fixed to the wheel of the truck or commercial vehicle by being inserted into a hole made in the rim, which hole has a diameter between 9.7 mm ÷ 10 mm or between 15.7 mm ÷ 16.1 mm.

Therefore, in the embodiment in Fig. 3 and 8, the maximum external diameter of the stem 18, i.e. in the lower threaded portion 215 for the locking nut 5 to be screwed thereon, is between 9.3 mm ÷ 9.65 mm.

In the embodiment in Fig. 6, 7 and 9, in which the valve is provided with a grommet, the maximum external diameter of the stem 18, i.e. in the lower threaded portion 215 for the locking nut 5 to be screwed thereon, is between 10.1 mm ÷ 10.35 mm, and, when the grommet is included, is between 14.85 mm ÷ 16.15 mm.

In the valve 1 according to this invention, the valve body 10 is made of a high-strength and lead-free material, for example aluminum.

In the valve 1 according to this invention, the locking nut 5 is preferably also made of a high-strength and lead-free material, for example an aluminum alloy having a lead content of less than 0.1%, or galvanized steel.

Some preferred examples of aluminum used to produce the valve 1 according to this invention will now be described. The series number for each aluminum is given, according to the reference standard for numerical designation of aluminum alloys, i.e. standard UNI EN 573-1:2005, titled "Aluminum and aluminum alloys - Chemical composition and form of wrought products - Part 1: Numerical designation system."

The aluminum used is preferably an aluminum of the 2000 series (Al-copper alloys), known as Avional.

The alloy is an aluminum and copper alloy. The aluminum content is between 88% ÷ 97% and the copper content is between 2% ÷ 5%.

In one embodiment, the aluminum used is identified by the series number 2033 and has a chemical composition comprising, in addition to aluminum between 91% ÷ 97%, at least: Si 0.10 ÷ 1.20; Fe ≤ 0.70; Cu 2.20 ÷ 2.70; Mn 0.40 ÷ 1.00; Mg 0.20 ÷ 0.60; Cr ≤ 0.15; Ni ≤ 0.15; Zn ≤ 0.50; Ti ≤ 0.10; Bi 0.05 ÷ 0.80.

In one embodiment, the aluminum used is identified by the series number 2077.

The aluminum used is preferably an aluminum of the 6000 series (Al-silicon and magnesium alloys), known as Anticorodal.

The alloy is an aluminum, silicon and magnesium alloy. The aluminum content is between 93% ÷ 99%, the silicon content is between 0.40% ÷ 1.40%, and the magnesium content is between 0.60% ÷ 1.20%.

In one embodiment, the aluminum used is identified by the series number 6061 and has a chemical composition comprising, in addition to aluminum between 95% ÷ 99%, at least: Si 0.40 ÷ 0.80; Fe ≤ 0.70; Cu 0.15 ÷ 0.40; Mn ≤ 0.15; Mg 0.80 ÷ 1.20; Cr 0.04 ÷ 0.35; Zn ≤ 0.25; Ti ≤ 0.15.

In one embodiment, the aluminum used is identified by the series number 6026 and has a chemical composition comprising, in addition to aluminum between 93% ÷ 99%, at least: Si 0.60 ÷ 1.40; Fe ≤ 0.70; Cu 0.20 ÷ 0.50; Mn 0.20 ÷ 1.00; Mg 0.60 ÷ 1.20; Cr ≤ 0.30; Zn ≤ 0.30; Ti ≤ 0.20.

In one embodiment, the aluminum used is identified by the series number 6082 and has a chemical composition comprising, in addition to aluminum between 94% ÷ 99%, at least: Si 0.70 ÷ 1.30; Fe ≤ 0.50; Cu ≤ 0.10; Mn 0.40 ÷ 1.00; Mg 0.60 ÷ 1.20; Cr ≤ 0.25; Zn ≤ 0.20; Ti ≤ 0.10.

The valve 10 and the locking nut 5 are preferably made of aluminum having a coating; typical coatings include anodization or zinc flake coatings.

A valve 1 according to this invention is innovatively made of lead-free metal but maintains a high fatigue strength and tensile strength and good workability and deformability.

Advantageously, a valve 1 according to this invention is thus lighter and less expensive than traditional brass valves.

A valve 1 according to this invention is advantageously more easily recyclable than traditional brass valves.

By comparison with traditional brass valves, a valve 1 according to this invention may advantageously be customizable, for example by coloring the coating.

A person skilled in the art may make numerous modifications and variations to the valve described above, which modifications and variations are all contained within the scope of the invention as defined in the following claims.

## Claims

1. A valve (1) for inflating a tire of a truck or commercial vehicle, comprising:
- a valve body (10) having a head (11) below which a stem (18) provided with an end portion (181) and an external thread (215) extends, in which a mechanism (180) is inserted for inflating/deflating the tire;
- a locking nut (5) which is screwable at the external thread (214) of the stem (18);
**characterized in that** the valve body (10) is made of aluminum alloy with a lead content less than 0.1%.

2. A valve (1) according to claim 1, wherein the locking nut (5) is also made of aluminum alloy with a lead content less than 0.1% or of galvanized steel.

3. A valve (1) according to claim 1 or 2, wherein the alloy is of the 2000 series, i.e., of the aluminum and copper type, or of the 6000 series, i.e., of the aluminum, silicon, and magnesium type.

4. A valve (1) according to any one of the preceding claims, wherein the aluminum used is 2033 and has a chemical composition comprising, in addition to aluminum between 91% ÷ 97%, at least: Si 0.10 ÷ 1.20; Fe ≤ 0.70; Cu 2.20 ÷ 2.70; Mn 0.40 ÷ 1.00; Mg 0.20 ÷0.60; Cr ≤ 0.15; Ni ≤ 0.15; Zn ≤ 0.50; Ti ≤ 0.10; Bi 0.05 ÷ 0.80.

5. A valve (1) according to any one of the preceding claims, wherein the aluminum used is 2077.

6. A valve (1) according to any one of the preceding claims, wherein the aluminum used is 6061 and has a chemical composition comprising, in addition to aluminum between 95% ÷ 99%, at least: Si 0.40 ÷ 0.80; Fe ≤ 0.70; Cu 0.15 ÷ 0.40; Mn ≤ 0.15; Mg 0.80 ÷ 1.20; Cr 0.04 ÷ 0.35; Zn ≤ 0.25; Ti ≤ 0.15.

7. A valve (1) according to any one of the preceding claims, wherein the aluminum used is 6026 and has a chemical composition comprising, in addition to aluminum between 93% ÷ 99%, at least: Si 0.60 ÷ 1.40; Fe ≤ 0.70; Cu 0.20 ÷ 0.50; Mn 0.20 ÷ 1.00; Mg 0.60 ÷ 1.20; Cr ≤ 0.30; Zn ≤ 0.30; Ti ≤ 0.20.

8. A valve (1) according to any one of the preceding claims, wherein the aluminum used is 6082 and has a chemical composition comprising, in addition to aluminum between 94% ÷ 99%, at least: Si 0.70 ÷ 1.30; Fe ≤ 0.50; Cu ≤ 0.10; Mn 0.40 ÷ 1.00; Mg 0.60 ÷ 1.20; Cr ≤ 0.25; Zn ≤ 0.20; Ti ≤ 0.10.

9. A valve (1) according to any one of the preceding claims, wherein the end portion (181) of the stem (18) is closed by a cap (182) which is screwable at an external thread (214) of the stem (18).

10. A valve (1) according to any one of the preceding claims, comprising a transducer (3), and wherein the head (11) of the valve body (10) is provided with an internally threaded hole (111) into which a drilled screw (4) is inserted for fixing the transducer (3) to the valve body (10).

11. A valve (1) according to any one of the preceding claims, adapted to be inserted into a rim hole having a diameter between 9.7 mm ÷ 10 mm, wherein the maximum outer diameter of the stem (18) at a lower threaded portion (215) for screwing the locking nut (5) is between 9.3 mm ÷ 9.65 mm.

12. A valve (1) according to any one of the claims from 1 to 10, adapted to be inserted into a rim hole having a diameter between 15.7 mm ÷ 16.1 mm, wherein the maximum outer diameter of the stem (18) at a lower threaded portion (215) for screwing the locking nut (5) is between 10.1 mm ÷ 10.35 mm, and comprises a seal (12) in the form of grommet between 14.85 mm ÷ 16.15 mm.
